# EUROPEAN PATENT APPLICATION

(11) **EP 4 769 675 A1**
(43) Date of publication of application: **01.07.2026**
(21) Application number: 25830992.1
(22) Date of filing: 04.04.2025
(51) Int. Cl.: H01M 10/658, H01M 50/289, H01M 50/211, H01M 50/224, H01M 50/227

(54) **BATTERY PACK**

(30) Priority: 20.06.2024 KR 20240080281
(71) Applicant: LG Energy Solution, Ltd., Seoul 07335 (KR)
(72) Inventor: HWANG, Won Pill, Daejeon 34122 (KR)
(74) Representative: BCKIP Part mbB
(86) International application number: PCT/KR2025/004520
(87) International publication number: WO 2025/263767

(57) **Abstract**

Embodiments provide a battery pack. The battery pack includes a pack housing including a base plate and side walls, first to third battery cell assemblies provided on the base plate and each including a plurality of battery cells arranged in a first direction, a heat blocking pad between the first and second battery cell assemblies, and a first partition wall between the second and third battery cell assemblies.

## Description

### [Technical Field]

The present disclosure relates to a battery pack. The present application claims the benefit of priority based on Korean Patent Application No. 10-2024-0080281, filed on June 20, 2024, and the entire contents of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the stability of secondary batteries is increasing. A driver's life may be in danger when an accident such as fire occurs in a secondary battery used for mobility and thus research on technology for enhancing the stability of secondary batteries is indispensable.

### [Disclosure]

### [Technical Problem]

The present disclosure is directed to providing a battery pack with improved safety.

### [Technical Solution]

Embodiments of the present disclosure provide a battery pack. The battery pack includes a pack housing including a base plate and side walls, first to third battery cell assemblies provided on the base plate and each including a plurality of battery cells arranged in a first direction, a heat blocking pad between the first and second battery cell assemblies, and a first partition wall between the second and third battery cell assemblies.

A length of the heat blocking pad in a second direction perpendicular to the first direction may be different from a length of each of the first and second battery cell assemblies in the second direction.

The length of the heat blocking pad in a second direction perpendicular to the first direction may be greater than the length of each of the first and second battery cell assemblies in the second direction.

The heat blocking pad may be spaced apart from the first partition wall with the second battery cell assembly therebetween.

Each of the first to third battery cell assemblies may include a frame assembly surrounding the plurality of battery cells and a flame cover coupled to the frame assembly.

The frame assembly may include a U-frame and a top plate that are welded together.

The heat blocking pad may be in contact with the flame cover of each of the first and second battery cells.

The heat blocking pad may include a pad case, thermal diffusion layers in the pad case, and a heat absorbing material.

The thermal diffusion layers may be spaced apart from each other with the heat absorbing material therebetween.

Each of the thermal diffusion layers may include a metal.

The heat absorbing material may contain water and a high absorbent resin.

The battery cells of each of the first to third battery cell assemblies may include a cell case, and the cell case may include the same material as the pad case.

The heat blocking pad may have a dog bone shape.

The heat blocking pad may have a dumbbell shape.

### [Advantageous Effects]

According to embodiments of the present disclosure, an inter-module pad including a case, a thermally conductive layer, and a super-absorbent polymer (SAP) may be provided between modules. The inter-module pad is applicable to a narrow space in which a cross-beam cannot be accommodated and blocks heat propagation between modules, thus improving the safety of a battery pack.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a plan view of a battery pack according to embodiments.
FIG. 2 is a perspective view of a battery cell assembly according to embodiments.
FIG. 3 is an exploded perspective view of a battery cell assembly according to embodiments.
FIG. 4 is a flowchart of a manufacturing method of a battery pack according to embodiments.
FIG. 5 is a perspective view for describing a manufacturing method of a battery pack according to embodiments.
FIG. 6 is a plan view for describing a manufacturing method of a battery pack according to embodiments.
FIG. 7 is a side view of a heat blocking pad according to embodiments.
FIG. 8 is a cross-sectional view of a heat blocking pad according to embodiments.
FIG. 9 is a perspective view for describing a manufacturing method of a battery pack according to embodiments.
FIG. 10 is a plan view for describing a manufacturing method of a battery pack according to embodiments.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts matching corresponding to the present disclosure on the basis of the principle that the inventor(s) of the application can appropriately define the terms or expressions to optimally explain the present disclosure.

Therefore, embodiments set forth herein and configurations illustrated in the drawings are only embodiments of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

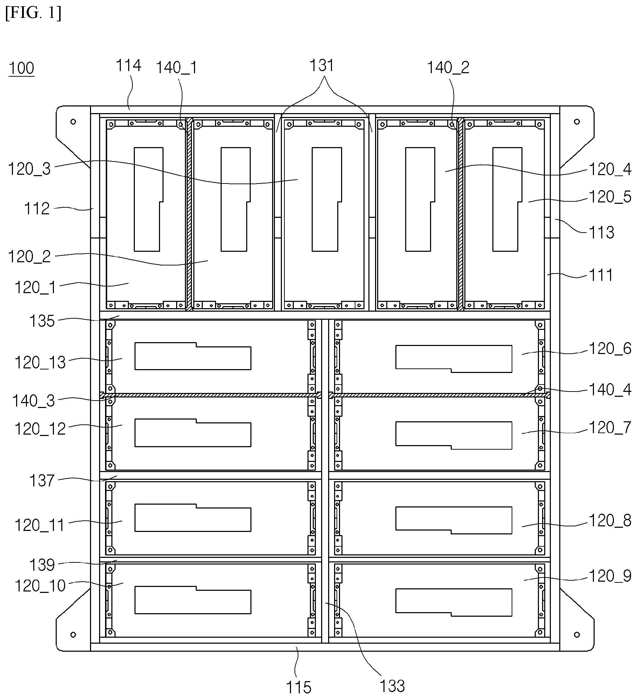

FIG. 1 is a plan view of a battery pack 100 according to embodiments.

Referring to FIG. 1, the battery pack 100 may include a pack housing 110, a plurality of battery cell assemblies 120_1, 120_2, 120_3, 120_4, 120_5, 120_6, 120_7, 120_8, 120_9, 120_10, 120_11, 120_12 and 120_13 (hereinafter, 120_1 to 120_13), first partition walls 131, a second partition wall 133, a third partition wall 135, fourth partition walls 137, fifth partition walls 139, and heat blocking pads 140_1, 140_2, 140_3 and 140_4. The battery pack 100 may be a final product to be mounted in an application such as a vehicle.

The housing 110 may provide a space in which the plurality of battery cell assemblies 120_1 to 120_13 are mounted. The pack housing 110 may include a base plate 111 and side walls 112, 113, 114, and 115.

Each of the base plate 111 and the side walls 112 and 113 may be provided by an extrusion process. The side walls 114 and 115 may also be provided by the extrusion process. The side walls 112, 113, 114, and 115 may be substantially perpendicular to the base plate 111.

According to embodiments, the base plate 111 and the side walls 112 and 113 may be coupled by friction stir welding. The base plate 111 may include a plurality of unit plates coupled to each other by friction stir welding.

Here, two directions substantially parallel to an upper surface of the base plate 111 are defined as an X-axis direction and a Y-axis direction, and a direction substantially perpendicular to the upper surface of the base plate 111 is defined as a Z-axis direction. The X-axis direction, the Y-axis direction, and the Z-axis direction may be substantially perpendicular to one another.

The base plate 111 may include a plurality of cooling channels. The plurality of cooling channels may provide a passage for moving, for example, a refrigerant such as water. The plurality of cooling channels may be formed by the extrusion process.

The plurality of battery cell assemblies 120_1 to 120_13 may be on the base plate 111 of the pack housing 110. The base plate 111 may support the plurality of battery cell assemblies 120_1 to 120_13. The side walls 112, 113, 114, and 115 may horizontally surround the plurality of battery cell assemblies 120_1 to 120_13.

The battery cell assemblies 120_1, 120_2, 120_3, 120_4 and 120_5 ( hereinafter, 120_1 to 120_5) may be arranged in the Y-axis direction. The battery cell assemblies 120_1 to 120_5 may be sequentially arranged in the Y-axis direction. The battery cell assembly 120_2 may be interposed between the battery cell assemblies 120_1 and 120_3. The battery cell assembly 120_3 may be interposed between the battery cell assemblies 120_2 and 120_4. The battery cell assembly 120_4 may be interposed between the battery cell assemblies 120_3 and 120_5. The battery cell assemblies 120_1 and 120_5 may be spaced apart from each other with the battery cell assemblies 120_2, 120_3 and 120_4 therebetween.

The battery cell assemblies 120_6, 120_7, 120_8 and 120_9 (hereinafter, 120_6 to 120_9) may be arranged in the X-axis direction. The battery cell assemblies 120_6 to 120_9 may be sequentially arranged in the X-axis direction. The battery cell assembly 120_7 may be interposed between the battery cell assemblies 120_6 and 120_8. The battery cell assembly 120_8 may be interposed between the battery cell assemblies 120_7 and 120_9. The battery cell assemblies 120_6 and 120_9 may be spaced apart from each other with the battery cell assemblies 120_7 and 120_8 therebetween.

The battery cell assemblies 120_10, 120_11, 120_12 and 120_13 (hereinafter, 120_10 to 120_13) may be arranged in the X-axis direction. The battery cell assemblies 120_10 to 120_13 may be sequentially arranged in the X-axis direction. The battery cell assembly 120_11 may be interposed between the battery cell assemblies 120_10 and 120_12. The battery cell assembly 120_12 may be interposed between the battery cell assemblies 120_11 and 120_13. The battery cell assemblies 120_10 and 120_13 may be spaced apart from each other with the battery cell assemblies 120_11 and 120_12 therebetween.

Each of the first partition walls 131, the second partition wall 133, the third partition wall 135, the fourth partition walls 137, and the fifth partition walls 139 may be on the base plate 111. Each of the first partition walls 131, the second partition wall 133, the third partition wall 135, the fourth partition walls 137, and the fifth partition walls 139 may be provided integrally with portions of the base plate 111 by an extrusion process or may be welded to the base plate 111.

Each of the first partition walls 131 and the second partition wall 133 may be substantially parallel to each of the side walls 112 and 113. Each of the first and second partition walls 131 and 133 may be interposed between the side walls 112 and 113.

Each of the third partition wall 135, the fourth partition walls 137, and the fifth partition walls 139 may be substantially parallel to each of the side walls 114 and 115. Each of the third partition wall 135, the fourth partition walls 137, and the fifth partition walls 139 may be interposed between the side walls 114 and 115.

Each of the first and second partition walls 131 and 133 may extend in the X-axis direction. One of the first partition walls 131 may be interposed between the battery cell assemblies 120_2 and 120_3. One of the first partition walls 131 may isolate the battery cell assemblies 120_2 and 120_3 in the Y-axis direction. The other one of the first partition walls 131 may be interposed between the battery cell assemblies 120_3 and 120_4. The other one of the first partition walls 131 may isolate the battery cell assemblies 120_3 and 120_4 in the Y-axis direction. The second partition wall 133 may be interposed between the battery cell assemblies 120_6 to 120_9 and the battery cell assemblies 120_10 to 120_13. The second partition wall 133 may isolate the battery cell assemblies 120_6 to 120_9 and the battery cell assemblies 120_10 to 120_13 in the Y-axis direction.

There may be no heat blocking pad between the battery cell assemblies 120_2 and 120_3. There may be no heat blocking pad between the battery cell assemblies 120_3 and 120_4. There may be no heat blocking pad between the battery cell assemblies 120_6, 120_7, 120_8 and 120_9 and the battery cell assemblies 120_10, 120_11, 120_12 and 120_13. Each of the heat blocking pads 140_1, 140_2, 140_3, and 140_4 may be spaced apart from each of the first and second partition walls 131 and 133.

Each of the third partition wall 135, the fourth partition walls 137, and the fifth partition walls 139 may extend in the Y-axis direction. The third partition wall 135 may be interposed between the battery cell assemblies 120_1 to 120_5 and the battery cell assemblies 120_6, 120_7, 120_8, 120_9, 120_10, 120_11, 120_12 and 120_13 (hereinafter, 120_6 to 120_13). The third partition wall 135 may isolate the battery cell assemblies 120_1 to 120_5 and the battery cell assemblies 120_6 to 120_13 in the X-axis direction.

The fourth partition walls 137 may overlap each other in the Y-axis direction. The second partition wall 133 may be between the fourth partition walls 137. One of the fourth partition walls 137 may be interposed between the battery cell assemblies 120_7 and 120_8. One of the fourth partition walls 137 may isolate the battery cell assemblies 120_7 and 120_8 in the Y-axis direction. The other one of the fourth partition walls 137 may be interposed between the battery cell assemblies 120_11 and 120_12. The other one of the fourth partition walls 137 may isolate the battery cell assemblies 120_11 and 120_12 in the Y-axis direction.

The fifth partition walls 139 may overlap each other in the Y-axis direction. The second partition wall 133 may be between the fifth partition walls 139. One of the fifth partition walls 139 may be interposed between the battery cell assemblies 120_8 and 120_9. One of the fifth partition walls 139 may isolate the battery cell assemblies 120_8 and 120_9 in the Y-axis direction. The other of the fifth partition walls 139 may be interposed between the battery cell assemblies 120_10 and 120_11. The other of the fifth partition walls 139 may isolate the battery cell assemblies 120_10 and 120_11 in the Y-axis direction.

There may be no heat blocking pad between the battery cell assemblies 120_1 to 120_5 and the battery cell assemblies 120_6 to 120_13. There may be no heat blocking pad between the battery cell assemblies 120_7 and 120_8. There may be no heat blocking pad between the battery cell assemblies 120_8 and 120_9. There may be no heat blocking pad between the battery cell assemblies 120_6 to 120_9 and the battery cell assemblies 120_10 to 120_13. There may be no heat blocking pad between the battery cell assemblies 120_10 and 120_11. There may be no heat blocking pad between the battery cell assemblies 120_11 and 120_12. Each of the heat blocking pads 140_3 and 140_4 may be spaced apart from the third partition wall 135. Each of the heat blocking pads 140_1, 140_2, 140_3 and 140_4 may be spaced apart from each of the fourth and fifth partition walls 137 and 139.

The heat blocking pads 140_1, 140_2, 140_3 and 140_4 may be in a space between the plurality of battery cell assemblies 120_1 to 120_13, which is not wide enough to accommodate the first to fifth partition walls 131, 133, 135, 137 and 139.

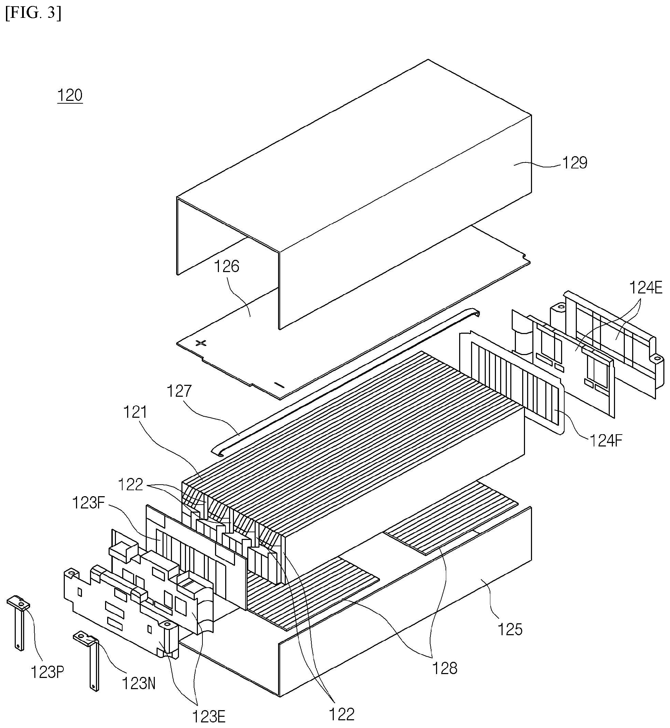

The heat blocking pad 140_1 may be interposed between the battery cell assemblies 120_1 and 120_2. The heat blocking pad 140_1 may isolate the battery cell assemblies 120_1 and 120_2 in the Y-axis direction. The heat blocking pad 140_1 may be in contact with each of the battery cell assemblies 120_1 and 120_2. The heat blocking pad 140_1 may be in contact with a flame cover 129 (see FIG. 3) of each of the battery cell assemblies 120_1 and 120_2.

The heat blocking pad 140_2 may be interposed between the battery cell assemblies 120_4 and 120_5. The heat blocking pad 140_2 may isolate the battery cell assemblies 120_4 and 120_5 in the Y-axis direction. The heat blocking pad 140_2 may be in contact with each of the battery cell assemblies 120_4 and 120_5. The heat blocking pad 140_2 may be in contact with a flame cover 129 (see FIG. 3) of each of the battery cell assemblies 120_4 and 120_5.

The heat blocking pad 140_3 may be interposed between the battery cell assemblies 120_6 and 120_7. The heat blocking pad 140_3 may isolate the battery cell assemblies 120_6 and 120_7 in the X-axis direction. The heat blocking pad 140_3 may be in contact with each of the battery cell assemblies 120_6 and 120_7. The heat blocking pad 140_3 may be in contact with a flame cover 129 (see FIG. 3) of each of the battery cell assemblies 120_6 and 120_7.

The heat blocking pad 140_4 may be interposed between the battery cell assemblies 120_12 and 120_13. The heat blocking pad 140_4 may isolate the battery cell assemblies 120_12 and 120_13 in the X-axis direction. The heat blocking pad 140_4 may be in contact with each of the battery cell assemblies 120_12 and 120_13. The heat blocking pad 140_4 may be in contact with a flame cover 129 (see FIG. 3) of each of the battery cell assemblies 120_12 and 120_13.

Accordingly, neighboring ones of the battery cell assemblies 120_1 to 120_13 may be isolated by one of the first to fifth partition walls 131, 133, 135, 137 and 139 and the heat blocking pads 140_1, 140_2, 140_3 and 140_4 to prevent thermal propagation between neighboring ones of the battery cell assemblies 120_1 to 120_13, thereby improving the safety of the battery pack 100.

A length of the heat blocking pad 140_1 (e.g., a length thereof in the X-axis direction) may be different from a length of each of the battery cell assemblies 120_1 and 120_2 (e.g., a length thereof in the X-axis direction). The length of the heat blocking pad 140_1 (e.g., the length thereof in the X-axis direction) may be greater than the length of each of the battery cell assemblies 120_1 and 120_2 (e.g., the length thereof in the X-axis direction).

A length of the heat blocking pad 140_2 (e.g., a length thereof in the X-axis direction) may be different from a length of each of the battery cell assemblies 120_4 and 120_5 (e.g., a length thereof in the X-axis direction). The length of the heat blocking pad 140_2 (e.g., the length thereof in the X-axis direction) may be greater than the length of each of the battery cell assemblies 120_4 and 120_5 (e.g., the length thereof in the X-axis direction).

A length of the heat blocking pad 140_3 (e.g., a length thereof in the Y-axis direction) may be different from a length of each of the battery cell assemblies 120_6 and 120_7 (e.g., a length thereof in the Y-axis direction). The length of the heat blocking pad 140_3 (e.g., the length thereof in the Y-axis direction) may be greater than the length of each of the battery cell assemblies 120_6 and 120_7 (e.g., the length thereof in the Y-axis direction).

A length of the heat blocking pad 140_4 (e.g., a length thereof in the Y-axis direction) may be different from a length of each of the battery cell assemblies 120_12 and 120_3 (e.g., a length thereof in the Y-axis direction). The length of the heat blocking pad 140_4 (e.g., the length thereof in the Y-axis direction) may be greater than the length of each of the battery cell assemblies 120_12 and 120_13 (e.g., the length thereof in the Y-axis direction).

The battery pack 100 may further include a battery management system (BMS). The BMS may be configured to monitor, balance, and control the battery pack 100. The monitoring of the battery pack 100 may include measuring voltages and currents of certain nodes inside the plurality of battery cell assemblies 120_1 to 120_13 and measuring temperatures at set positions in the battery pack 100.

The balancing of the battery pack 100 is an operation of reducing a deviation between the plurality of battery cell assemblies 120_1 to 120_13. The controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery cell assemblies 120_1 to 120_13 from being shortened.

The battery pack 100 may further include exhaust devices coupled to the side walls 114 and 115. One of the side walls 114 and 115 may include exhaust holes connected to the exhaust devices. The exhaust devices may be configured to delay thermal propagation by discharging a high-temperature gas from the inside of the battery pack 100 to the outside when a thermal runaway event occurs in the plurality of battery cell assemblies 120_1 to 120_13.

Here, the thermal runaway event of the plurality of battery cell assemblies 120_1 to 120_13 is a state in which a change of temperature of the plurality of battery cell assemblies 120_1 to 120_13 accelerates the change of temperature, i.e., uncontrollable positive feedback. A temperature of the plurality of battery cell assemblies 120_1 to 120_13 that are in a thermal runaway state sharply increases and a large amount of high-pressure gas and combustion debris are discharged.

The battery pack 100 may further include additional electronic components such as a cooling device, a power relay assembly (PRA), and a safety plug. The cooling device may include a cooling fan. The cooling fan may circulate air in the battery pack 100 to prevent overheating of each of the plurality of battery cell assemblies 120_1 to 120_13. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120_1 to 120_13 and an external load (e.g., a motor of a vehicle), when abnormal voltage such as voltage surges occurs. The additional electronic components may be interposed between the plurality of battery cell assemblies 120_1 to 120_13 and the side wall 115. A space between the battery cell assemblies 120_1 to 120_13 and the side wall 115 may be referred to as an electronic component mounting area.

The battery pack 100 may further include a plurality of inter-bus bars configured to electrically connect the battery cell assemblies 120_1 to 120_13. The battery cell assemblies 120_1 to 120_13 may be connected in series by the plurality of inter-bus bars. Accordingly, the battery pack 100 may be configured to output a high voltage to an external load (e.g., a motor of a vehicle).

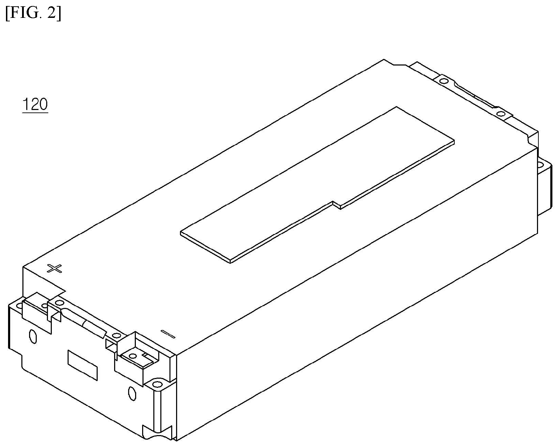

FIG. 2 is a perspective view of a battery cell assembly 120 according to embodiments.

FIG. 3 is an exploded perspective view of the battery cell assembly 120 according to embodiments.

Each of the plurality of battery cell assemblies 120_1 to 120_13 of FIG. 1 may be substantially the same as a battery cell assembly 120 to be described with reference to FIGS. 2 and 3 below.

The battery cell assembly 120 may include a plurality of battery cells 121, pads 122, first integrated circuit assembly 123C, a first end plate assembly 123E, a second integrated circuit assembly 124C, a second end plate assembly 124E, a U-frame 125, a top plate 126, a flat flexible cable (FFC) assembly 127, TIM layers 128, and a flame cover 129.

Each of the plurality of battery cells 121 may be a lithium ion battery. Each of the plurality of battery cells 121 includes an electrode assembly, an electrolyte, and a cell case 121C. The cell case 121C may include an aluminum laminate sheet, a cylindrical metal can, a prismatic metal can or a combination thereof. The technical idea of the present disclosure will now be described with respect to an example in which the cell case 121C is an aluminum laminate sheet. Those of ordinary skill in the art will be able to easily derive an embodiment in which the cell case 121C is a cylindrical can or a prismatic can, based on the description herein.

The cell case 121C may include an inner resin layer, a metal layer, and an outer resin layer. The inner resin layer may have thermal adhesion, thus enabling sealing of the cell case 121C. The inner resin layer may include, for example, a polyolefin-based material. The metal layer may include an alloy of iron, carbon, chromium and manganese, an alloy of iron, chromium and nickel, or aluminum.

The electrode assembly in the cell case 121C includes a positive electrode, a negative electrode, and a separator between the positive electrode and the negative electrode. The electrode assembly may be a jelly-roll type electrode assembly or a stack type electrode assembly. A jelly-roll type electrode assembly may include a structure in which a positive electrode, a negative electrode, and a separator between the positive and negative electrodes are wound together. A stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

Each of the plurality of battery cells 121 may include a positive electrode lead and a negative electrode lead. The positive electrode lead and the negative electrode lead may be referred to collectively as an electrode lead. That is, an electrode lead may be a positive electrode lead or a negative electrode lead. The positive electrode lead may be coupled to a negative electrode tab of the electrode assembly. The negative electrode lead may be coupled to the negative electrode tab of the electrode assembly.

The plurality of battery cells 121 may be arranged in a direction. Each of the plurality of battery cells 121 may be a bidirectional cell. Accordingly, the positive electrode lead and the negative electrode lead of each of the plurality of battery cells 121 may protrude in opposite directions.

Hereinafter, the technical idea of the present disclosure will be described with respect to an example in which each of the plurality of battery cells 121 is a bidirectional cell as described above. Technicians of ordinary skill in the art will be able to easily derive an embodiment in which each of the plurality of battery cells 121 is a unidirectional cell, based on the description herein.

Some of the plurality of battery cells 121 may be connected in parallel. The number of battery cells 121 to be connected in parallel may be determined by a current to be output through the battery cell assembly 120. A group consisting of battery cells 121 connected to each other in parallel may be referred to as a bank. The plurality of battery cells 121 may constitute a plurality of banks and the plurality of banks may be connected in series. The number of banks to be connected in series may be determined by a voltage to be output through the battery cell assembly 120.

Positive electrode leads of battery cells 121 of a first bank may be short-circuited with a bus bar 123P. The positive electrode leads of the battery cells 121 of the first bank may be welded with the bus bar 123P. Negative electrode leads of battery cells 121 of a last bank may be short-circuited with a bus bar 123N. The negative electrode leads of the battery cells 121 of the last bank may be welded with the bus bar 123N. A resulting voltage of a circuit including the plurality of battery cells 121 may be output to the outside through the bus bars 123P and 123N.

Banks between the first bank and the last bank may be referred to as intermediate banks. Negative electrode leads of battery cells 121 of each of the intermediate banks may be in contact with positive electrode leads of battery cells 121 of a subsequent bank. The negative electrode leads of the battery cells 121 of each of the intermediate banks may be welded with the positive electrode leads of the battery cells 121 of the subsequent bank. Positive electrode leads of the battery cells 121 of each of the intermediate banks may be in contact with negative electrode leads of battery cells 121 of a preceding bank. The positive electrode leads of the battery cells 121 of each of the intermediate banks may be welded with the negative electrode leads of the battery cells 121 of the subsequent bank.

According to embodiments, the pads 112 may be polyurethane pads. According to embodiments, each of the pads 122 may include an elastic material. The pads 122 may absorb the swelling of the plurality of battery cells 121. One bank or two banks may be interposed between neighboring pads 122 but embodiments are not limited thereto.

According to other embodiments, the pads 122 may be thermal barriers. According to embodiments, each of the plurality of pads 122 may have a high melting temperature and a low thermal conductivity. When each of the plurality of pads 122 is a thermal barrier, each of the plurality of pads 122 may include a flame-retardant material such as ceramic or coated glass fiber.

The first integrated circuit assembly 123IC may be on a first side of the battery cell assembly 120. The first integrated circuit assembly 123IC may be coupled to the plurality of battery cells 121. A positive electrode lead of each of battery cells 121 of an odd-numbered bank and a negative electrode lead of battery cells 121 of an even-numbered bank may be on the first side.

The first integrated circuit assembly 123IC may include a first insulating frame and a first integrated circuit mounted on the first insulating frame. The first insulating frame may include an insulating material. The first insulating frame may support the first integrated circuit, the first bus bar 123P, the second bus bar 123N, the positive electrode lead of each of the battery cells 121 of the odd-numbered banks, and the negative electrode lead of each of the battery cells 121 of the even-numbered banks.

The first integrated circuit may be mounted on the first insulating frame. The first integrated circuit may be configured to be electrically connected to the positive electrode lead of each of the battery cells 121 of the odd-numbered banks and the negative electrode lead of each of the battery cells 121 of the even-numbered banks. The first integrated circuit may be configured to sense voltages of a plurality of nodes including the plurality of battery cells 121. The first integrated circuit may include a plurality of sensing plates welded with the positive electrode leads of the battery cells 121 of the odd-numbered banks and the negative electrode leads of the battery cells 121 of the even-numbered banks. The first integrated circuit may be connected to the positive electrode lead of each of the battery cells 121 of the odd-numbered banks and the negative electrode lead of each of the battery cells 121 of the even-numbered banks through wires, and the plurality of sensing plates may be omitted in this case.

The first end plate assembly 123E may be coupled to the U-frame 125 and the top plate 126. The first end plate assembly 123E may be welded with the U-frame 125 and the top plate 126. The first end plate assembly 123E may be on the first side of the battery cell assembly 120. The first end plate assembly 123E may cover the first integrated circuit assembly 123IC.

The second integrated circuit assembly 124 may be on a second side of the battery cell assembly 120. The second side may be opposite to the first side. The second integrated circuit assembly 124 may be spaced apart from the first integrated circuit assembly 123IC with the plurality of battery cells 121 therebetween. The second integrated circuit assembly 124 may be coupled to the plurality of battery cells 121. The negative electrode lead of each of the battery cells 121 of an odd-numbered bank and the positive electrode lead of each of the battery cells 121 of an even-numbered bank may be on the second side.

The second integrated circuit assembly 124 may include a second insulating frame, a second integrated circuit, and a second insulating cover 124C. The second insulating frame may include an insulating material. The second insulating frame may support the second integrated circuit, the negative electrode lead of each of the battery cells 121 of the odd-numbered banks, and the positive electrode lead of each of the battery cells 121 of the even-numbered banks.

The second integrated circuit may be mounted on the second insulating frame. The second integrated circuit may be configured to be electrically connected to the negative electrode lead of each of the battery cells 121 of the odd-numbered banks and the positive electrode lead of each of the battery cells 121 of the even-numbered banks. The second integrated circuit may be configured to sense voltages of a plurality of nodes including the plurality of battery cells 121.

The second end plate assembly 124E may be coupled to the U-frame 125 and the top plate 126. The second end plate assembly 124E may be welded with the U-frame 125 and the top plate 126. The second end plate assembly 124E may be on the second side of the battery cell assembly 120. The second end plate assembly 124E may cover the second integrated circuit assembly 124IC.

The U-frame 125 may have a U-shape when viewed from the front. The U-frame 125 may include a bottom plate 125B and side walls 125W. Each of the side walls 125W may be connected to end portions of the bottom plate 125B. Each of the side walls 125W may be substantially perpendicular to the bottom plate 125B. The top plate 126 may be coupled to the U-frame 125. The top plate 126 may be fixed to the U-frame 125 by welding. The top plate 126 and the U frame 125 may form a frame assembly together. Alternatively, the top plate 126 and the U-frame 125 may be replaced with a mono frame having a hollow quadrangular pillar shape. The mono frame may have substantially the same shape as a combination of the top plate 126 and the U-frame 125.

The FFC assembly 127 may be on the plurality of battery cells 121. The FFC assembly 127 may be interposed between the plurality of battery cells 121 and the top plate 126. The FFC assembly 127 may have an approximate line shape. The FFC assembly 127 may connect the first integrated circuit and the second integrated circuit to each other. Voltages collected by the second integrated circuit may be transmitted to the first integrated circuit through the FFC assembly 127.

The TIM layers 128 may be interposed between the bottom plate 125B and the battery cells 121. The TIM layers 128 may include a thermosetting material but is not limited thereto. The TIM layers 128 may be cured at room temperature. The TIM layers 128 may fix the bottom plate 125B and the battery cells 121 to each other. The TIM layers 128 may thermally couple the bottom plate 125B and the battery cells 121 to improve cooling efficiency of the battery cell assembly 120.

The flame cover 129 may include a fire-resistant material. The flame cover 129 may be coupled to the U-frame 125 and the top plate 126. The flame cover 129 may be fixed to the U-frame 125 and the top plate 126 via, for example, an adhesive. The flame cover 129 may be coupled to the top plate 126 and the side walls 125W of the U-frame 125. The flame cover 129 may be spaced apart from the bottom plate 125B of the U-frame 125.

### (Second embodiment)

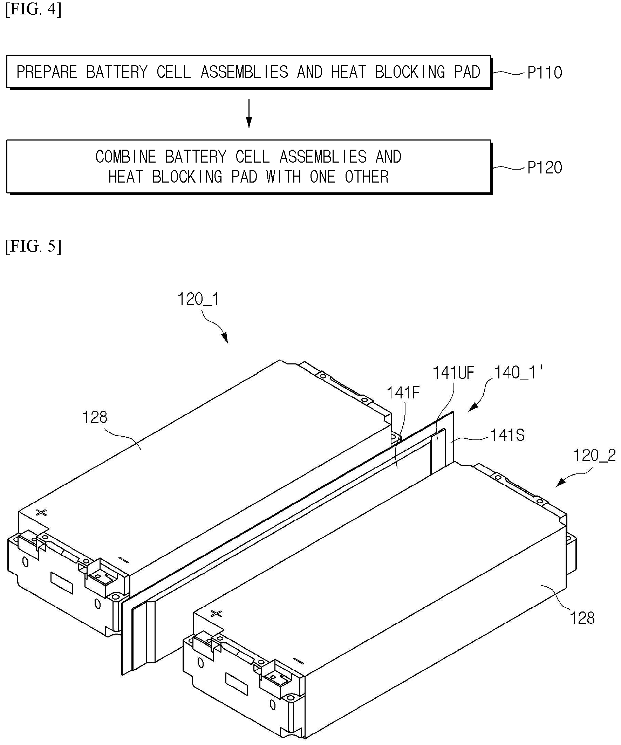

FIG. 4 is a flowchart of a manufacturing method of a battery pack according to embodiments.

FIG. 5 is a perspective view for describing a manufacturing method of a battery pack according to embodiments.

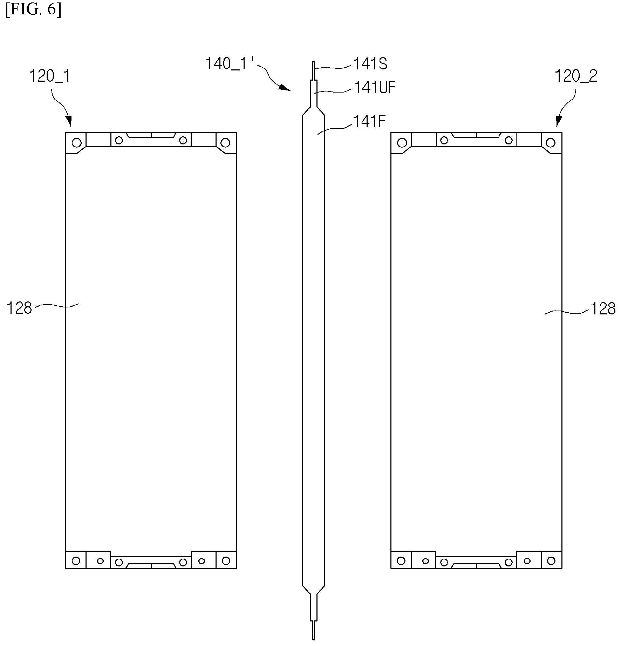

FIG. 6 is a plan view for describing a manufacturing method of a battery pack according to embodiments.

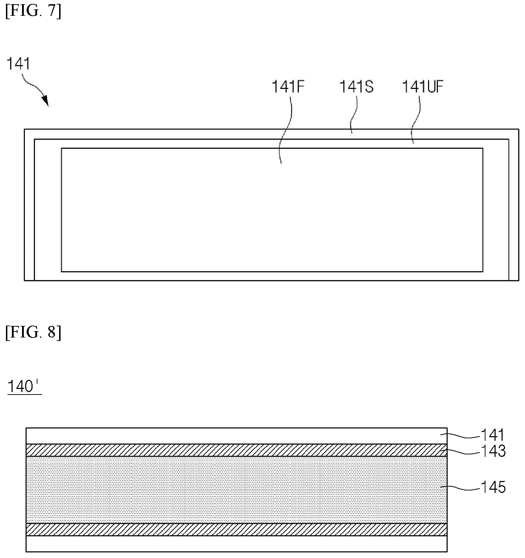

FIG. 7 is a side view of a heat blocking pad 140_1' according to embodiments.

FIG. 8 is a cross-sectional view of the heat blocking pad 140_1' according to embodiments.

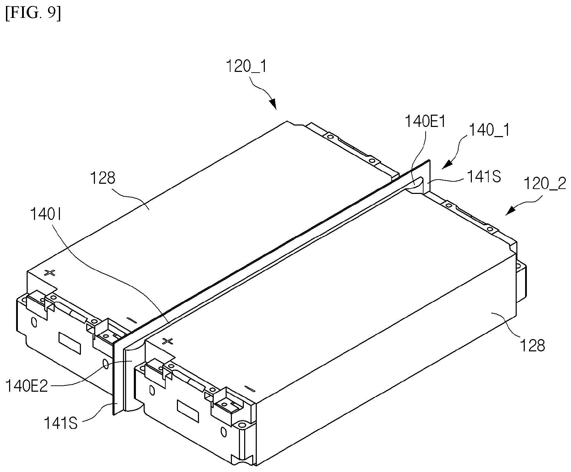

FIG. 9 is a perspective view for describing a manufacturing method of a battery pack according to embodiments.

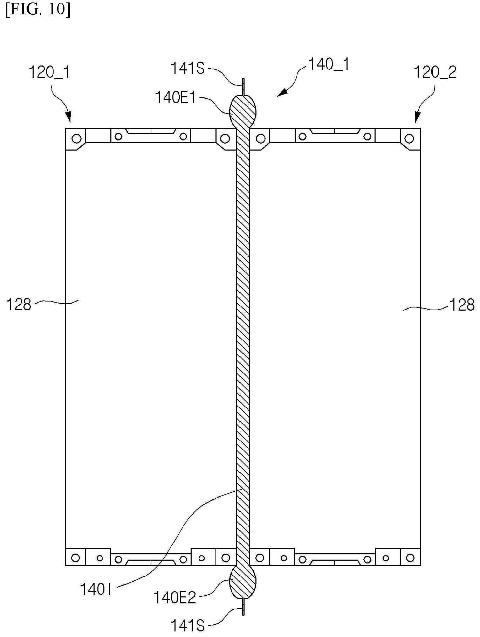

FIG. 10 is a plan view for describing a manufacturing method of a battery pack according to embodiments.

Referring to FIGS. 4 to 8, battery cell assemblies 120_1 and 120_2 and the heat blocking pad 140_1' may be provided. The battery cell assemblies 120_1 and 120_2 are substantially the same as those described above with reference to FIGS. 2 and 3 and thus redundant description thereof is omitted here.

The heat blocking pad 140_1' may be different from the heat blocking pad 140_1 of FIG. 1. The heat blocking pad 140_1' may have yet to be coupled to the battery cell assemblies 120_1 and 120_2 and thus may not be pressed by the battery cell assemblies 120_1 and 120_2 and may have a shape different from that of the heat blocking pad 140_1 of FIG. 1.

The heat blocking pad 140_1' may include a pad case 141, thermal diffusion layers 143, and a heat absorbing material 145. The heat blocking pad 140_1' may be configured to be deformed by an external pressure. When the pad case 141 includes a plurality of layers, an outermost layer may include an insulating material.

The thermal diffusion layers 143 may be covered by the pad case 141. The pad case 141 may surround the thermal diffusion layers 143. Each of the thermal diffusion layers 143 may be interposed between the pad case 141 and the heat absorbing material 145. The thermal diffusion layers 143 may be spaced apart from each other with the heat absorbing material 145 therebetween. The heat absorbing material 145 may be interposed between the heat diffusion layers 143. One of the thermal diffusion layers 143 may mediate heat transfer between the battery cell assembly 120_1 and the heat absorbing material 145, and the other of the thermal diffusion layers 143 may mediate heat transfer between the battery cell assembly 120_2 and the heat absorbing material 145.

Each of the thermal diffusion layers 143 may have high thermal conductivity. The heat diffusion layers 143 may be configured to evenly distribute heat transferred from the outside to the entire heat absorbing material 145. Each of the thermal diffusion layers 143 may include a metal. Each of the heat diffusion layers 143 may include, for example, copper foil but embodiments are not limited thereto.

The heat absorbing material 145 may have a high ignition point and high specific heat. According to embodiments, the heat absorbing material 145 may include a fluid. As another example, the heat absorbing material 145 may include powder. Accordingly, the shape of each of the plurality of cooling pouches 141 may be deformed according to pressure applied from the outside.

As a non-limiting example, the heat absorbing material 145 may include water and a high absorbent resin. The high absorbent resin may be also referred to as a super absorbent polymer (SAP), a super absorbency material (SAM), an absorbent bel material (AGM) or the like. The high absorbent resin turns into a gel when absorbing water, and the gel may not discharge the absorbed water or may discharge a small amount of water even when external pressure is applied thereto.

According to embodiments, the heat absorbing material 145 may further include a thickener. The thickener may increase the viscosity of the heat absorbing material 145. According to embodiments, the heat absorbing material 145 may further include an insulating precursor. The insulating precursor may be configured to form a pore structure (i.e., a structure in which air is collected) in a carbonized layer in a combustion situation. Accordingly, when the heat absorbing material 145 containing the insulating precursor in addition to water and the high absorbent resin is exposed in a thermal runaway event, the propagation of thermal runaway event may be prevented or alleviated owing to an insulating action of the carbonized layer including the pore structure.

To distinguish between the cell case 121C and the pad case 141, the cell case 121C may be referred to as a first pouch case and the pad case 141 may be referred to as a second pouch case. According to embodiments, the cell case 121C and the pad case 141 may include the same material but are not be limited thereto. The cell case 121C and the pad case 141 may include different materials.

The pad case 141 may cover the thermal diffusion layers 143 and the heat absorbing material 145. The thermal diffusion layers 143 and the heat absorbing material 145 may be in the pad case 141. Before being coupled to the battery cell assemblies 120_1 and 120_2, the pad case 141 may include a filling part 141F, a sealed part 141S, and an unfilled part 141UF. The heat absorbing material 145 may be present in the filling part 141F of the pad case 141. The sealed part 141S of the pad case 141 may be a thermally fused part. The unfilled part 141UF of the pad case 141 may be interposed between the filling part 141F and the sealed part 141S. The unfilled part 141UF of the pad case 141 may be a part that is not filled with the heat absorbing material 145. The unfilled part 141UF of the pad case 141 may be an unsealed part. The unfilled part 141UF may be formed by a process of removing air inside the heat blocking pad 140 before the sealing of the heat blocking pad 140. The heat absorbing material 145 in the filling part 141F of the pad case 141 may be moved to the unfilled part 141UF of the pad case 141 by external pressure.

The filling part 141F of the pad case 141 may be between the battery cell assemblies 120_1 and 120_2 when coupled to the battery cell assemblies 120_1 and 120_2. In the pad case 141, the filling part 141F may overlap the battery cell assemblies 120_1 and 120_2 in the Y-axis direction.

According to embodiments, a width of the filling part 141F may be greater than a width of the sealed part 141S. According to embodiments, a width of the filling part 141F may be greater than a width of the unfilled part 141UF. According to embodiments, the width of the unfilled part 141F may be greater than the width of the sealed part 141S.

Next, referring to FIGS. 4, 6, 9 and 10, in P120, the battery cell assemblies 120_1 and 120_2 and the heat blocking pad 140_1' may be combined with one another. The battery cell assemblies 120_1 and 120_2 and the heat blocking pad 140_1' may be fixed via an adhesive. During the combination of the battery cell assemblies 120_1 and 120_2 and the heat blocking pad 140_1', the shape of the heat blocking pad 140_1' may change, thus providing a heat blocking pad 140_1.

The heat blocking pad 140_1 may include an intermediate part 140I and first and second end parts 140E1 and 140E2 of the battery cell assemblies 120_1 and 120_2. The intermediate part 140I may be between the first and second end parts 140E1 and 140E2.

As the heat blocking pad 140_1' is pressed by the battery cell assemblies 120_1 and 120_2, the heat absorbing material 145 may move to the first and second end parts 140E1 and 140E2. According to embodiments, a width of each of the first and second end parts 140E1 and 140E2 may be different from a width of the intermediate part 1401. According to embodiments, the width of each of the first and second end parts 140E1 and 140E2 may be greater than the width of the intermediate part 1401.

According to embodiments, a shape of an upper surface of the heat blocking pad 140_1 may include a dog bone shape. According to embodiments, the shape of the upper surface of the thermal barrier pad 140_1 may include a dumbbell shape.

Next, an assembly of the battery cell assemblies 120_1 and 120_2 and the heat blocking pad 140_1 may be loaded in the pack housing 100 (see FIG. 1). Battery cell assemblies 120_4 and 120_5 and a heat blocking pad 140_2, battery cell assemblies 120_6 and 120_7 and a heat blocking pad 140_3, and battery cell assemblies 120_12 and 120_13 and a heat blocking pad 140_4 may be provided by a method substantially the same as that described above with reference to FIGS. 4 to 10, and thus, redundant description thereof is omitted here.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A battery pack comprising:
a pack housing including a base plate and side walls;
first to third battery cell assemblies provided on the base plate and each including a plurality of battery cells arranged in a first direction;
a heat blocking pad between the first and second battery cell assemblies; and
a first partition wall between the second and third battery cell assemblies.

2. The battery pack of claim 1, wherein a length of the heat blocking pad in a second direction perpendicular to the first direction is different from a length of each of the first and second battery cell assemblies in the second direction.

3. The battery pack of claim 1, wherein a length of the heat blocking pad in a second direction perpendicular to the first direction is greater than a length of each of the first and second battery cell assemblies in the second direction.

4. The battery pack of claim 1, wherein the heat blocking pad is spaced apart from the first partition wall with the second battery cell assembly therebetween.

5. The battery pack of claim 1, wherein each of the first to third battery cell assemblies includes a frame assembly surrounding the plurality of battery cells and a flame cover coupled to the frame assembly.

6. The battery pack of claim 5, wherein the frame assembly includes a U-frame and a top plate that are welded together.

7. The battery pack of claim 5, wherein the heat blocking pad is in contact with the flame cover of each of the first and second battery cells.

8. The battery pack of claim 1, wherein the heat blocking pad includes a pad case, thermal diffusion layers in the pad case, and a heat absorbing material.

9. The battery pack of claim 8, wherein the thermal diffusion layers are spaced apart from each other with the heat absorbing material therebetween.

10. The battery pack of claim 8, wherein each of the thermal diffusion layers includes a metal.

11. The battery pack of claim 8, wherein the heat absorbing material contains water and a high absorbent resin.

12. The battery pack of claim 8, wherein the battery cells of each of the first to third battery cell assemblies includes a cell case,
wherein the cell case includes the same material as the pad case.

13. The battery pack of claim 1, wherein the heat blocking pad has a dog bone shape.

14. The battery pack of claim 1, wherein the heat blocking pad has a dumbbell shape.
